# EUROPEAN PATENT APPLICATION

(11) **EP 4 815 078 A1**
(43) Date of publication of application: **30.09.2026**
(21) Application number: 24914965.9
(22) Date of filing: 23.10.2024
(51) Int. Cl.: H01M 10/04, H01M 10/0587

(54) **WINDING DEVICE AND WINDING METHOD**

(30) Priority: 04.01.2024 CN 202410012761
(71) Applicant: Contemporary Amperex Technology Co., Limited, Ningde, Fujian 352100 (CN)
(72) Inventor: GUO, Xin, Ningde, Fujian 352100 (CN); WU, Xiang, Ningde, Fujian 352100 (CN); ZHANG, Xiaowei, Ningde, Fujian 352100 (CN); WEN, Yuqian, Ningde, Fujian 352100 (CN)
(74) Representative: Kraus & Lederer PartGmbB
(86) International application number: PCT/CN2024/126761
(87) International publication number: WO 2025/145748

(57) **Abstract**

This application provides a winding device and a winding method, pertaining to the field of battery technologies. The winding device includes a feeding mechanism and a winding needle, the feeding mechanism being configured to convey an electrode plate and a separator; and the winding needle being configured to wind the electrode plate and the separator conveyed by the feeding mechanism to form an electrode assembly, where a relationship between a diameter r of the winding needle and a diameter R of the electrode assembly after winding is completed satisfies $\frac{R}{r} > 10$ .

## Description

### CROSS-REFERENCE TO RELATED APPLICATIONS

This application claims priority to Chinese Patent Application No. 202410012761.2, filed on January 4, 2024, and entitled "WINDING DEVICE AND WINDING METHOD," which is incorporated herein by reference in the entirety of this application.

### TECHNICAL FIELD

This application relates to the field of battery technologies, and in particular, to a winding device and a winding method.

### BACKGROUND

Energy conservation and emission reduction are key to the sustainable development of the automotive industry. Electric vehicles have become an important part of the sustainable development of the automotive industry due to their advantages of energy saving and environmental protection. For electric vehicles, battery technology is an important factor affecting their development.

In the production process of a battery cell, an electrode plate and a separator need to be wound to form an electrode assembly of the battery cell. How to improve the reliability of the battery cell is an important research direction in battery production.

### SUMMARY

This application aims to at least resolve one of the technical problems existing in the background. To this end, an objective of this application is to provide a winding device and a winding method, which reduce the probability of collapse of a center hole of an electrode assembly and improve the reliability of a battery cell.

An embodiment of a first aspect of this application provides a winding device, including a feeding mechanism and a winding needle, where the feeding mechanism is configured to convey an electrode plate and a separator; and the winding needle is configured to wind the electrode plate and the separator conveyed by the feeding mechanism to form an electrode assembly, where a relationship between a diameter r of the winding needle and a diameter R of the electrode assembly after winding is completed satisfies: $\frac{R}{r} > 10$.

In the technical solution of the embodiment of this application, the winding needle winds the electrode plate and the separator conveyed by the feeding mechanism to form the electrode assembly, and the relationship between the diameter r of the winding needle and the diameter R of the electrode assembly after winding is completed satisfies: $\frac{R}{r} > 10$. The diameter r of the winding needle is much smaller than the diameter R of the electrode assembly after winding is completed, which can reduce the probability of collapse of a center hole of the electrode assembly after winding is completed, thereby improving the reliability of the electrode assembly.

In some embodiments, the relationship between the diameter r of the winding needle and the diameter R of the electrode assembly after winding is completed satisfies: $\frac{R}{r} \leq 15$. The relationship between the diameter r of the winding needle and the diameter R of the electrode assembly after winding is completed satisfies: $\frac{R}{r} \leq 15$, which can further reduce the probability of collapse of the center hole of the electrode assembly after winding is completed, thereby further improving the reliability of the electrode assembly.

In some embodiments, the feeding mechanism includes an adjustment mechanism, and the adjustment mechanism is configured to clamp the electrode plate and the separator and drive the electrode plate and the separator to move, so as to adjust tension of the electrode plate and the separator. The adjustment mechanism clamps the electrode plate and the separator and drives the electrode plate and the separator to move, so as to adjust the tension of the electrode plate and the separator, which can reduce tension of the separator and tension of the electrode plate that the winding needle is subjected to during winding of the electrode assembly, which can reduce the probability of deformation of the winding needle, thereby prolonging the service life of the winding needle.

In some embodiments, the adjustment mechanism may include a first roller and a second roller that are disposed opposite to each other, and the electrode plate and the separator pass between the first roller and the second roller; and the first roller and the second roller are configured to clamp the electrode plate and the separator and drive the electrode plate and the separator to move, so as to adjust the tension of the electrode plate and the separator. The first roller and the second roller that are disposed opposite to each other and included in the adjustment mechanism can guide conveyance of the electrode plate and the separator, thereby improving stability of the electrode plate and the separator during conveyance.

In some embodiments, in a winding acceleration stage of winding the electrode plate and the separator, the adjustment mechanism drives the electrode plate and the separator to move, such that a moving speed of the electrode plate and the separator is greater than or equal to a winding speed of the winding needle winding the electrode plate and the separator, so as to adjust the tension of the electrode plate and the separator. In the winding acceleration stage of winding the electrode plate and the separator, the adjustment mechanism drives the electrode plate and the separator to move, such that the moving speed of the electrode plate and the separator is greater than or equal to the winding speed of the winding needle winding the electrode plate and the separator, which can reduce the tension of the separator and the tension of the electrode plate that the winding needle is subjected to during winding of the electrode assembly, which can reduce the probability of deformation of the winding needle, thereby prolonging the service life of the winding needle.

In some embodiments, the winding needle is of an integrally formed structure. The integrally formed structure can reduce the diameter of the winding needle, and further reduce a diameter of a center hole of the electrode assembly formed by winding, thereby further reducing the probability of collapse of the center hole of the electrode assembly after winding is completed, and further improving the reliability of the electrode assembly.

In some embodiments, the winding device further includes an auxiliary winding needle, the auxiliary winding needle is disposed on one side of the winding needle, and the auxiliary winding needle and the winding needle clamp a starting end of the electrode plate and the separator. The auxiliary winding needle is disposed on one side of the winding needle, and the auxiliary winding needle and the winding needle clamp the starting end of the electrode plate and the separator, which facilitates winding of the electrode plate and the separator by the winding device and improves winding efficiency of the winding device for the electrode assembly.

In some embodiments, the winding device further includes an auxiliary mechanism, the auxiliary mechanism is disposed on one side of the winding needle, the auxiliary mechanism abuts against an outer circumference of the electrode assembly, and a rotation direction of the auxiliary mechanism is opposite to a winding direction of the winding needle, so as to adjust the tension of the electrode plate and the separator. The auxiliary mechanism abuts against the outer circumference of the electrode assembly, and the rotation direction of the auxiliary mechanism is opposite to the winding direction of the winding needle, which can adjust impact of the tension of the electrode plate and the separator on the electrode assembly and the winding needle, thereby improving a yield rate of the electrode assembly and prolonging the service life of the winding needle.

In some embodiments, the auxiliary mechanism is disposed corresponding to a position at which the electrode plate and the separator are wound onto the winding needle. Disposing the auxiliary mechanism at the position at which the electrode plate and the separator are wound onto the winding needle can improve efficiency and probability of tension adjustment of the electrode plate and the separator.

In some embodiments, the winding device further includes a cutter configured to cut the electrode plate and the separator, and the cutter is disposed on a side of the feeding mechanism away from the winding needle. Disposing the cutter on the side of the feeding mechanism away from the winding needle can improve reliability of the winding device and help improve a yield rate of the electrode assembly formed by winding.

An embodiment of a second aspect of this application provides a winding method, the winding method including: conveying an electrode plate and a separator to a winding needle; and winding, by the winding needle in a preset direction, the electrode plate and the separator to form an electrode assembly, where a relationship between a diameter r of the winding needle winding the electrode assembly and a diameter R of the electrode assembly after winding is completed satisfies: $\frac{R}{r} > 10$.

In the technical solution of the embodiments of this application, the winding needle winds the conveyed electrode plate and separator to form the electrode assembly, and the relationship between the diameter r of the winding needle and the diameter R of the electrode assembly after winding is completed satisfies: $\frac{R}{r} > 10$. The diameter r of the winding needle is much smaller than the diameter R of the electrode assembly after winding is completed, which can reduce the probability of collapse of a center hole of the electrode assembly after winding is completed, thereby improving the reliability of the electrode assembly.

In some embodiments, the relationship between the diameter r of the winding needle and the diameter R of the electrode assembly after winding is completed satisfies: $\frac{R}{r} \leq 15$. The relationship between the diameter r of the winding needle and the diameter R of the electrode assembly after winding is completed satisfies: $\frac{R}{r} \leq 15$, which can further reduce the probability of collapse of the center hole of the electrode assembly after winding is completed, thereby further improving the reliability of the electrode assembly.

In some embodiments, the winding method may further include: in a winding acceleration stage of winding the electrode plate and the separator, controlling a moving speed of the electrode plate and the separator to be greater than or equal to a winding speed of the winding needle winding the electrode plate and the separator, so as to adjust tension of the electrode plate and the separator. In the winding acceleration stage of winding the electrode plate and the separator, the moving speed of the electrode plate and the separator is controlled such that the moving speed of the electrode plate and the separator is greater than or equal to the winding speed of the winding needle winding the electrode plate and the separator, which can reduce tension of the separator and tension of the electrode plate that the winding needle is subjected to during winding of the electrode assembly, which can reduce the probability of deformation of the winding needle, thereby prolonging the service life of the winding needle.

In some embodiments, the winding method may further include: controlling a rotation direction of an auxiliary mechanism to be opposite to the preset direction, so as to adjust the tension of the electrode plate and the separator. Making the rotation direction of the auxiliary mechanism opposite to the winding direction of the winding needle can adjust impact of the tension of the electrode plate and the separator on the electrode assembly and the winding needle, thereby improving a yield rate of the electrode assembly and prolonging the service life of the winding needle.

An embodiment of a third aspect of this application provides a battery cell, including an electrode assembly formed by winding using the winding device in the foregoing embodiment.

An embodiment of a fourth aspect of this application provides a battery, including the battery cell in the foregoing embodiment.

An embodiment of a fifth aspect of this application provides an electric apparatus, including the battery in the foregoing embodiment, where the battery is configured to provide electrical energy.

The above description is merely an overview of the technical solutions of this application. In order to more clearly understand the technical means of this application, implementation may be carried out in accordance with the content of the specification, and in order to make the above and other objectives, features, and advantages of this application more comprehensible, specific embodiments of this application are set forth below.

### BRIEF DESCRIPTION OF DRAWINGS

In the drawings, unless otherwise specified, identical reference numerals throughout multiple drawings represent identical or similar components or elements. These drawings are not necessarily drawn to scale. It should be understood that these drawings depict only some embodiments disclosed in accordance with this application and should not be considered as limiting the scope of this application. In order to more clearly illustrate the technical solutions of the embodiments of this application, the drawings to be used in the embodiments of this application are briefly described below. Obviously, the drawings described below are merely some embodiments of this application. For those of ordinary skill in the art, other drawings may also be obtained based on these drawings without creative efforts.
FIG. 1 is a schematic structural diagram of a winding device according to some embodiments of this application;
FIG. 2 is a first schematic diagram of deformation amount of a winding needle according to some embodiments of this application;
FIG. 3 is a second schematic diagram of deformation amount of a winding needle according to some embodiments of this application;
FIG. 4 is a third schematic diagram of deformation amount of a winding needle according to some embodiments of this application;
FIG. 5 is a schematic diagram of a winding needle subjected to tension according to some embodiments of this application;
FIG. 6 is a schematic structural diagram of a winding needle according to some embodiments of this application; and
FIG. 7 is a flowchart of a winding method according to some embodiments of this application.

Reference numerals of the drawings:
100. winding device; 110. feeding mechanism; 120. winding needle; 130. electrode plate; 140. separator; 150. electrode assembly; 160. adjustment mechanism; 161. first roller; 162. second roller; 121. auxiliary winding needle; 170. auxiliary mechanism; and 180. cutter.

### DETAILED DESCRIPTION

Embodiments of the technical solutions of this application are described in detail below with reference to the drawings. The following embodiments are only used to more clearly illustrate the technical solutions of this application, and therefore are only used as examples and cannot be used to limit the protection scope of this application.

Unless otherwise defined, all technical and scientific terms used herein have the same meaning as commonly understood by those skilled in the technical field to which this application belongs; the terms used herein are only for the purpose of describing specific embodiments and are not intended to limit this application; the terms "include" and "have" and any variations thereof in the specification, claims, and the above brief description of drawings of this application are intended to cover non-exclusive inclusion.

In the description of the embodiments of this application, the technical terms "first," "second," and the like are only used to distinguish different objects, and cannot be understood as indicating or implying relative importance or implicitly indicating the number, specific order, or primary-secondary relationship of the indicated technical features. In the description of the embodiments of this application, the meaning of "multiple" is two or more, unless otherwise explicitly and specifically defined.

Reference to "embodiment" herein means that a specific feature, structure, or characteristic described in conjunction with the embodiment may be included in at least one embodiment of this application. The appearance of this phrase in various places in the specification does not necessarily refer to the same embodiment, nor is it an independent or alternative embodiment that is mutually exclusive with other embodiments. Those skilled in the art explicitly and implicitly understand that the embodiments described herein may be combined with other embodiments.

In the description of the embodiments of this application, the term "and/or" is merely a description of an association relationship of associated objects, indicating that three relationships may exist, for example, A and/or B may indicate: A alone, both A and B, and B alone. In addition, the character "/" herein generally indicates that the associated objects before and after it are in an "or" relationship.

In the description of the embodiments of this application, the term "multiple" refers to two or more (including two). Similarly, "multiple groups" refers to two or more groups (including two groups), and "multiple sheets" refers to two or more sheets (including two sheets).

In the description of the embodiments of this application, the orientation or position relationships indicated by the technical terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like are based on the orientation or position relationships shown in the drawings, and are only for convenience of describing the embodiments of this application and simplifying the description, rather than indicating or implying that the referred means or element must have a specific orientation or be constructed and operated in a specific orientation, and therefore cannot be understood as limiting the embodiments of this application.

In the description of the embodiments of this application, unless otherwise explicitly specified and defined, the technical terms "mount," "connect," "couple," "fix," and the like should be understood in a broad sense, for example, may be a fixed connection, may be a detachable connection, or may be an integral connection; may be a mechanical connection or an electrical connection; may be a direct connection or an indirect connection through an intermediate medium; or may be internal communication between two elements or an interaction relationship between two elements. For those of ordinary skill in the art, the specific meanings of the above terms in the embodiments of this application can be understood according to specific situations.

At present, from the perspective of market development, traction batteries are increasingly widely used. Traction batteries are not only used in energy storage power systems such as hydropower, thermal power, wind power, and solar power stations, but also widely used in electric transportation tools such as electric bicycles, electric motorcycles, and electric vehicles, as well as in multiple fields such as military equipment and aerospace. With the continuous swelling of the application fields of traction batteries, their market demand is also constantly increasing.

As an energy storage system, cylindrical lithium-ion batteries have the characteristics of mature process, high production efficiency, and strong reliability, and have broad application prospects in civilian, aviation, aerospace, military communication, and combat fields. In recent years, with the continuous upgrading of military and civilian energy storage systems, higher requirements have been put forward for the cycle life of lithium-ion batteries.

For cylindrical lithium-ion batteries, winding is an indispensable and particularly important process in the production and manufacturing of electrode assemblies. Specifically, electrode plates and separators that have been laser-cut are fixed on a winding needle and wound into an electrode assembly along with rotation of the winding needle, with the separators, a positive electrode plate, a separator, and a negative electrode plate being wound; then, processes such as casing, welding, and formation are performed to form a cylindrical lithium-ion battery.

During charging of a cylindrical lithium-ion battery, swelling of a negative electrode material drives swelling of an electrode assembly, while the exterior of the electrode assembly is a battery steel shell, and the swelling is restricted. If outward swelling of the electrode assembly is blocked, it swells toward a center hole. The continuous charging process exacerbates this process, with continuous swelling toward the center hole causing collapse of the electrode assembly toward the center hole. The collapsed electrode assembly, accompanied by swelling and contraction processes in charged and non-charged states, increases the risk of a positive electrode cut surface piercing a separator, leading to increased self-discharge of the electrode assembly and low voltage, and in severe cases, short circuit, fire, and explosion of the electrode assembly, seriously affecting the safety of use of the cylindrical lithium-ion battery.

Based on the above considerations, in order to solve the problem that a center position of an electrode assembly is prone to collapse, this application proposes a winding device in which a winding needle winds an electrode plate and a separator conveyed by a feeding mechanism to form an electrode assembly, and a relationship between a diameter r of the winding needle and a diameter R of the electrode assembly after winding is completed satisfies: $\frac{R}{r} > 10$. The diameter r of the winding needle is much smaller than the diameter R of the electrode assembly after winding is completed, which can reduce the probability of collapse of a center hole of the electrode assembly after winding is completed, thereby improving the reliability of the electrode assembly.

The winding device disclosed in the embodiments of this application can be used to wind and form an electrode assembly, the formed electrode assembly can be used to manufacture a battery, and such a battery can be applied to various electric apparatus. The electric apparatus may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, or the like; the electric toy includes a stationary or mobile electric toy, for example, a game console, an electric car toy, an electric ship toy, an electric airplane toy, or the like; and the electric tool includes a metal cutting electric tool, a grinding electric tool, an assembly electric tool, and a railway electric tool, for example, an electric drill, an electric grinder, an electric wrench, an electric screwdriver, an electric hammer, an impact drill, a concrete vibrator, an electric planer, or the like. The embodiments of this application do not impose special restrictions on the above electric apparatus.

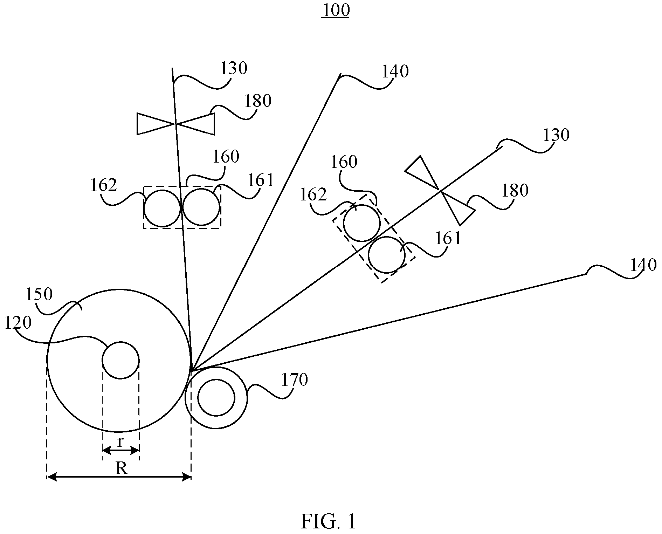

According to some embodiments of this application, this application provides a winding device 100. FIG. 1 is a schematic structural diagram of a winding device 100 according to some embodiments of this application. Referring to FIG. 1, the winding device 100 includes a feeding mechanism 110 and a winding needle 120, where the feeding mechanism 110 is configured to convey an electrode plate 130 and a separator 140; and the winding needle 120 is configured to wind the electrode plate 130 and the separator 140 conveyed by the feeding mechanism 110 to form an electrode assembly 150, where a relationship between a diameter r of the winding needle 120 and a diameter R of the electrode assembly 150 after winding is completed satisfies: $\frac{R}{r} > 10$.

In the embodiments of this application, the electrode plate 130 may include a positive electrode plate and a negative electrode plate, and the separator 140 may include a first separator and a second separator. The first separator is located between the positive electrode plate and the negative electrode plate and is configured to isolate the positive electrode plate from the negative electrode plate. The first separator and the second separator are respectively located on two sides of the negative electrode plate. In a process of winding the electrode plate 130 and the separator 140 using the winding device 100 to form the electrode assembly 150, the second separator can isolate the positive electrode plate from the negative electrode plate. The winding device 100 winds the positive electrode plate, the negative electrode plate, the first separator, and the second separator to form the electrode assembly 150.

In the embodiments of this application, the feeding mechanism 110 may be configured to place rolls of the electrode plate 130 and the separator 140 and convey the electrode plate 130 and the separator 140 as required. During conveyance of the electrode plate 130 and the separator 140 by the feeding mechanism 110, the position of the feeding mechanism 110 can be kept unchanged, so that the feeding mechanism 110 guides a movement direction and a movement path of the electrode plate 130 and the separator 140. The feeding mechanism 110 may be a driving roller, and when the electrode plate 130 and the separator 140 need to be released, the feeding mechanism 110 can actively rotate under drive of a motor to convey the electrode plate 130 and the separator 140; or the feeding mechanism 110 may be a driven roller, and when the electrode plate 130 and the separator 140 need to be released, the feeding mechanism 110 can rotate under drive of the electrode plate 130.

In the embodiments of this application, the winding device 100 may include four feeding mechanisms 110, where two feeding mechanisms 110 may be respectively configured to convey the positive electrode plate and the negative electrode plate, and the other two feeding mechanisms 110 may be respectively configured to convey the first separator and the second separator.

In the embodiments of this application, the winding needle 120 may be formed by combining two semi-cylindrical winding needles with semi-circular cross sections. During winding of the electrode assembly 150, the two semi-cylindrical winding needles clamp the first separator and the second separator to form a quasi-cylindrical structure, and then the winding needle 120 rotates, the negative electrode plate and the positive electrode plate are sequentially inserted into the rotating separator 140 for winding, and after a diameter of the electrode assembly 150 reaches a size requirement, the winding needle 120 is withdrawn to complete fabrication of the electrode assembly 150. The winding needle 120 may also be of an integrated structure. During winding of the electrode assembly 150, the winding needle 120 and an auxiliary winding needle 120 can clamp the first separator and the second separator to form a quasi-cylindrical structure, and then the winding needle 120 rotates, the negative electrode plate and the positive electrode plate are sequentially inserted into the rotating separator 140 for winding, and after the diameter of the electrode assembly 150 reaches the size requirement, the winding needle 120 is withdrawn to complete fabrication of the electrode assembly 150.

In an example, experiments are performed on electrode assemblies 150, these electrode assemblies 150 having center hole radii of 5.5 millimeters (mm), 5 mm, and 4 mm respectively, to determine swelling rates of the electrode plate 130 when center holes of the electrode assemblies 150 collapse. The experimental results are as follows: when a swelling rate of the electrode plate 130 of the electrode assembly 150 reaches 9.8%, a center hole of the electrode assembly 150 with a center hole radius of 5.5 mm starts to collapse; when the swelling rate of the electrode plate 130 of the electrode assembly 150 reaches 11%, a center hole of the electrode assembly 150 with a center hole radius of 5 mm starts to collapse; and when the swelling rate of the electrode plate 130 of the electrode assembly 150 reaches 14.3%, a center hole of the electrode assembly 150 with a center hole radius of 4 mm starts to collapse. The experimental results show that the smaller the center hole radius of the electrode assembly 150, the greater the swelling percentage of the electrode plate 130 at which collapse starts, that is, the smaller the diameter of the winding needle 120, the better the internal support force of the center hole of the electrode assembly 150 after winding is completed.

In the related art, the diameter R of the electrode assembly 150 after winding is completed is less than or equal to 10 times the diameter r of the winding needle 120, while in the embodiments of this application, the relationship between the diameter r of the winding needle 120 and the diameter R of the electrode assembly 150 after winding is completed satisfies: $\frac{R}{r} > 10$, that is, the diameter R of the electrode assembly 150 after winding is completed is at least more than 10 times the diameter r of the winding needle 120. The smaller the diameter of the winding needle 120, the smaller the radius of an internal center hole of the electrode assembly 150 after winding is completed, and the smaller the radius of the internal center hole of the electrode assembly 150, the greater the support strength of the internal center hole. During subsequent cyclic swelling of the electrode assembly 150, the probability of collapse of the internal center hole of the electrode assembly 150 caused by cyclic swelling can be reduced.

In the embodiments of this application, the winding needle 120 winds the electrode plate 130 and the separator 140 conveyed by the feeding mechanism 110 to form the electrode assembly 150, and the relationship between the diameter r of the winding needle 120 and the diameter R of the electrode assembly 150 after winding is completed satisfies: $\frac{R}{r} > 10$. The diameter r of the winding needle 120 is much smaller than the diameter R of the electrode assembly 150 after winding is completed, which can reduce the probability of collapse of a center hole of the electrode assembly 150 after winding is completed, thereby improving the reliability of the electrode assembly 150.

According to some embodiments, the relationship between the diameter r of the winding needle 120 and the diameter R of the electrode assembly 150 after winding is completed satisfies: $\frac{R}{r} \leq 15$.

In the embodiments of this application, if the diameter r of the winding needle 120 is too small relative to the diameter R of the electrode assembly 150 after winding is completed, since the diameter r of the winding needle 120 is too small, the winding needle 120 is more prone to deformation during winding, which leads to a reduction in the service life of the winding needle 120. In order to reduce the probability of collapse of a center hole of the electrode assembly 150 while reducing the probability of deformation of the winding needle 120 to prolong the service life of the winding needle 120, the diameter r of the winding needle 120 should not be too small relative to the diameter R of the electrode assembly 150 after winding is completed. The diameter R of the electrode assembly 150 may be less than or equal to 15 times the diameter r of the winding needle 120.

In the embodiments of this application, the relationship between the diameter r of the winding needle 120 and the diameter R of the electrode assembly 150 after winding is completed satisfies: $\frac{R}{r} \leq 15$, which can further reduce the probability of collapse of the center hole of the electrode assembly 150 after winding is completed, thereby further improving the reliability of the electrode assembly 150.

According to some embodiments, the feeding mechanism 110 includes an adjustment mechanism 160, and the adjustment mechanism 160 is configured to clamp the electrode plate 130 and the separator 140 and drive the electrode plate 130 and the separator 140 to move, so as to adjust tension of the electrode plate 130 and the separator 140.

During winding of the electrode assembly 150, since the separator 140 is mostly a ceramic-coated, aramid, or glue-coated separator 140, such a separator 140 is tightly adsorbed on the winding needle 120 due to electrostatic action during winding, which causes misalignment due to spiral distortion during winding, thereby causing the winding needle 120 to be subjected to greater tension, and the winding needle 120 generates deflection deformation, which affects the service life of the winding needle 120.

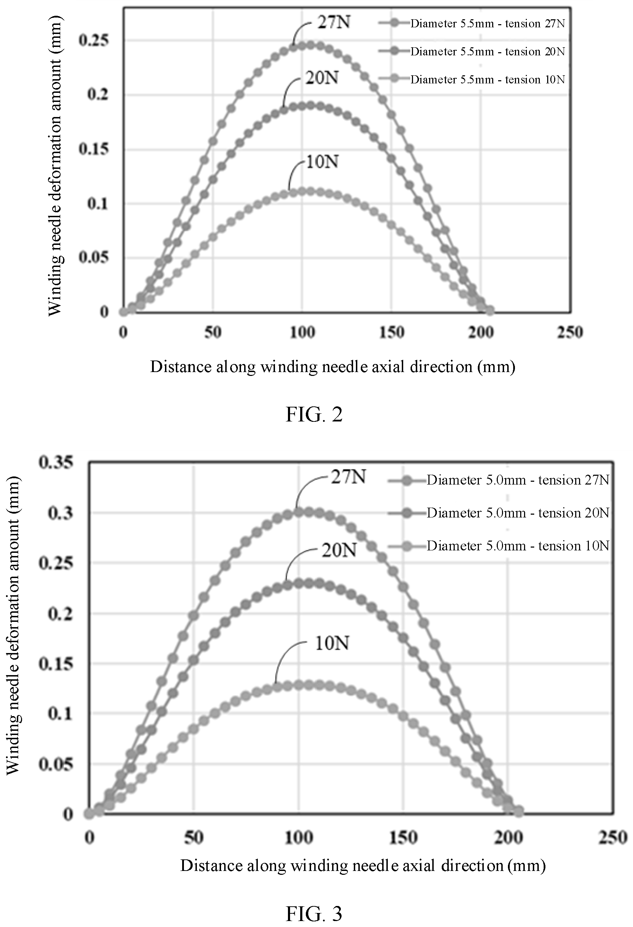

In an example, experiments are performed on deflection deformation of the winding needle 120, the winding needle 120 having a diameter r of 5.5 mm, when the winding needle 120 is subjected to tension of 10 Newtons (N), 20 N, and 27 N. FIG. 2 is a first schematic diagram of deformation amount of the winding needle 120 according to some embodiments of this application. Referring to FIG. 2, maximum deformations of the winding needle 120 under the action of tension of 10 N, 20 N, and 27 N are 0.246 mm, 0.19 mm, and 0.112 mm, respectively, and after the tension is reduced from 27 N to 10 N, the maximum deflection deformation amount is reduced by 54.47%.

In another example, experiments are performed on deflection deformation of the winding needle 120, the winding needle 120 having a diameter r of 5.0 mm, when the winding needle 120 is subjected to tension of 10 N, 20 N, and 27 N. FIG. 3 is a second schematic diagram of deformation amount of the winding needle 120 according to some embodiments of this application. Referring to FIG. 3, maximum deformations of the winding needle 120 under the action of 10 N, 20 N, and 27 N are 0.301 mm, 0.23 mm, and 0.129 mm, respectively, and after the tension is reduced from 27 N to 10 N, the maximum deflection deformation amount is reduced by 57.14%.

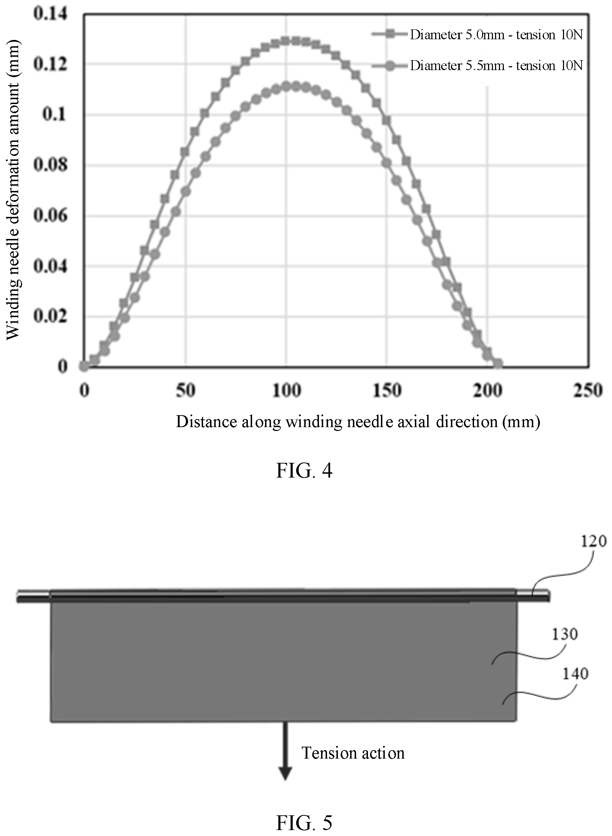

In yet another example, experiments are performed on deflection deformation of the winding needle 120, the winding needle 120 having diameters r of 5.5 mm and 5 mm respectively, when the winding needle 120 is subjected to tension of 10 N. FIG. 4 is a third schematic diagram of deformation amount of the winding needle 120 according to some embodiments of this application. Referring to FIG. 4, under the action of tension of 10 N, a maximum deflection deformation amount of the winding needle 120 with a diameter of 5.5 mm is 0.112 mm, and a maximum deflection deformation amount of the winding needle 120 with a diameter of 5.0 mm is 0.129 mm.

From the above description, it can be seen that the smaller the tension that the winding needle 120 is subjected to, the smaller the deflection deformation amount of the winding needle 120.

In the embodiments of this application, FIG. 5 is a schematic diagram of the winding needle 120 subjected to tension according to some embodiments of this application. As shown in FIG. 5, during winding of the electrode assembly 150, the tension that the winding needle 120 is subjected to includes tension of the electrode plate 130 and tension of the separator 140. Adjusting the tension that the winding needle 120 is subjected to may include simultaneously adjusting the tension of the electrode plate 130 and the tension of the separator 140. The feeding mechanism 110 may include an adjustment mechanism 160, and the adjustment mechanism 160 can clamp the electrode plate 130 and the separator 140 and drive the electrode plate 130 and the separator 140 to move. A direction in which the adjustment mechanism 160 drives the electrode plate 130 and the separator 140 to move may be the same as a direction in which the winding needle 120 winds the electrode plate 130 and the separator 140, and a speed at which the adjustment mechanism 160 drives the electrode plate 130 and the separator 140 to move may be greater than or equal to a speed at which the winding needle 120 winds the electrode plate 130 and the separator 140, thereby reducing the tension of the electrode plate 130 and the tension of the separator 140 that the winding needle 120 is subjected to.

In the embodiments of this application, the adjustment mechanism 160 clamps the electrode plate 130 and the separator 140 and drives the electrode plate 130 and the separator 140 to move, so as to adjust the tension of the electrode plate 130 and the separator 140, which can reduce the tension of the separator 140 and the tension of the electrode plate 130 that the winding needle 120 is subjected to during winding of the electrode assembly 150. This can reduce the probability of deformation of the winding needle 120, thereby prolonging the service life of the winding needle 120.

According to some embodiments, as shown in FIG. 1, the adjustment mechanism 160 may include a first roller 161 and a second roller 162 that are disposed opposite to each other, and the electrode plate 130 and the separator 140 pass between the first roller 161 and the second roller 162; and the first roller 161 and the second roller 162 are configured to clamp the electrode plate 130 and the separator 140 and drive the electrode plate 130 and the separator 140 to move, so as to adjust the tension of the electrode plate 130 and the separator 140.

In some examples, relative positions of the first roller 161 and the second roller 162 may be fixed. Pressure of the first roller 161 and the second roller 162 on the electrode plate 130 and the separator 140 is relatively small, which does not affect normal traveling of the electrode plate 130 and the separator 140. In some other examples, the relative positions of the first roller 161 and the second roller 162 may also be adjustable, for example, the first roller 161 and the second roller 162 may move away from or close to each other to release or clamp the electrode plate 130 and the separator 140.

In some examples, roller surfaces of the first roller 161 and the second roller 162 may be elastic, which can reduce the risk of the electrode plate 130 and the separator 140 being crushed.

Exemplarily, an axial direction of the first roller 161 and an axial direction of the second roller 162 are parallel to a width direction of the electrode plate 130 and the separator 140.

In the embodiments of this application, during adjustment of the tension of the electrode plate 130, the first roller 161 and the second roller 162 can clamp the electrode plate 130 and drive the electrode plate 130 to move. During movement of the electrode plate 130, the first roller 161 and the second roller 162 press the electrode plate 130 from two sides, and under the action of pressure, friction between the electrode plate 130 and the first roller 161 can reduce relative slip between the electrode plate 130 and the first roller 161, and friction between the electrode plate 130 and the second roller 162 can reduce relative slip between the electrode plate 130 and the second roller 162, so that the first roller 161 and the second roller 162 drive the electrode plate 130 to move. The first roller 161 and the second roller 162 adjust the tension of the electrode plate 130 by adjusting a speed of driving the electrode plate 130 to move. Exemplarily, if a speed at which the first roller 161 and the second roller 162 drive the electrode plate 130 to move is greater than or equal to a speed at which the winding needle 120 winds the electrode plate 130, the tension of the electrode plate 130 can be reduced.

In the embodiments of this application, the first roller 161 and the second roller 162 that are disposed opposite to each other and included in the adjustment mechanism 160 can guide conveyance of the electrode plate 130 and the separator 140, thereby improving stability of the electrode plate 130 and the separator 140 during conveyance.

According to some embodiments, in a winding acceleration stage of winding the electrode plate 130 and the separator 140, the adjustment mechanism 160 drives the electrode plate 130 and the separator 140 to move, such that a moving speed of the electrode plate 130 and the separator 140 is greater than or equal to a winding speed of the winding needle 120 winding the electrode plate 130 and the separator 140, so as to adjust the tension of the electrode plate 130 and the separator 140.

In a process in which the winding needle 120 winds the electrode plate 130 and the separator 140 to form the electrode assembly 150, a preparation stage (including preparation work such as station change and needle threading), a pre-winding and feeding stage (winding starts, and a rotational speed of the winding needle 120 is relatively slow at this time), a winding acceleration stage (the rotational speed of the winding needle 120 increases rapidly), a constant-speed winding stage (the rotational speed of the winding needle 120 is relatively fast and remains unchanged), a deceleration winding stage (the rotational speed of the winding needle 120 gradually decreases), and a finishing stage are usually undergone.

In the winding acceleration stage of winding the electrode plate 130 and the separator 140, the rotational speed of the winding needle 120 increases rapidly, that is, the winding speed of the winding needle 120 winding the electrode plate 130 and the separator 140 also increases rapidly. If the moving speed of the electrode plate 130 and the separator 140 is less than the winding speed of the winding needle 120 winding the electrode plate 130 and the separator 140 at this time, the tension of the electrode plate 130 and the separator 140 increases, causing deflection deformation of the winding needle 120, thereby affecting the service life of the winding needle 120. In the embodiments of this application, in the winding acceleration stage of winding the electrode plate 130 and the separator 140, the adjustment mechanism 160 drives the electrode plate 130 and the separator 140 to move, such that the moving speed of the electrode plate 130 and the separator 140 is greater than or equal to the winding speed of the winding needle 120 winding the electrode plate 130 and the separator 140, which can adjust the tension of the electrode plate 130 and the separator 140, reducing the tension of the electrode plate 130 and the separator 140.

In the embodiments of this application, in the winding acceleration stage of winding the electrode plate 130 and the separator 140, the adjustment mechanism 160 drives the electrode plate 130 and the separator 140 to move, such that the moving speed of the electrode plate 130 and the separator 140 is greater than or equal to the winding speed of the winding needle 120 winding the electrode plate 130 and the separator 140, which can reduce the tension of the separator 140 and the tension of the electrode plate 130 that the winding needle 120 is subjected to during winding of the electrode assembly 150, which can reduce the probability of deformation of the winding needle 120, thereby prolonging the service life of the winding needle 120.

According to some embodiments, the winding needle 120 is of an integrally formed structure.

In the related art, the winding needle 120 is mainly formed by combining two semi-cylindrical winding needles with semi-circular cross sections. During winding of the electrode assembly 150, the two semi-cylindrical winding needles 120 clamp the separator 140 to form a quasi-cylindrical structure, and then the winding needle 120 rotates, the negative electrode plate and the positive electrode plate are sequentially inserted into the rotating separator 140 for winding, and after the electrode assembly 150 reaches a size requirement, the winding needle 120 is withdrawn to complete fabrication of the electrode assembly 150. Since there is a gap between the two semi-cylindrical winding needles 120, a diameter of the winding needle 120 formed by the two semi-cylindrical winding needles 120 is greater than that of an integrally formed winding needle 120. Therefore, in order to reduce a diameter of a center hole of the electrode assembly 150, in the embodiments of this application, the winding needle 120 is of an integrally formed structure.

In the embodiments of this application, a cross-sectional shape of the winding needle 120 may be circular or elliptical, and the winding needle 120 may be of a hollow structure or a solid structure.

Exemplarily, the cross-sectional shape of the winding needle 120 may be any shape such as circular or elliptical.

In the embodiments of this application, the integrally formed structure can reduce the diameter of the winding needle 120, and further reduce a diameter of a center hole of the electrode assembly 150 formed by winding, thereby further reducing the probability of collapse of the center hole of the electrode assembly 150 after winding is completed, and further improving the reliability of the electrode assembly 150.

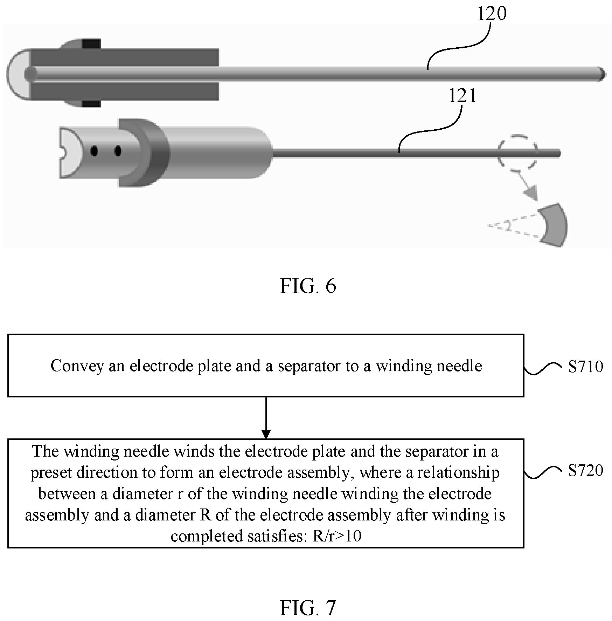

According to some embodiments, FIG. 6 is a schematic structural diagram of a winding needle according to some embodiments of this application. As shown in FIG. 5, the winding device 100 further includes an auxiliary winding needle 121 disposed on one side of the winding needle 120, and the auxiliary winding needle 121 and the winding needle 120 clamp a starting end of the electrode plate 130 and the separator 140.

In the embodiments of this application, since the winding needle 120 is of an integrally formed structure, the winding needle 120 cannot clamp the electrode plate 130 and the separator 140 to start winding at the beginning of winding. The auxiliary winding needle 121 cooperates with the winding needle 120 to clamp the starting end of the electrode plate 130 and the separator 140 to start winding to form the electrode assembly 150.

In the embodiments of this application, a shape of a cross section of the auxiliary winding needle 121 corresponds to a shape of the winding needle 120. For example, when the shape of the winding needle 120 is circular, the shape of the auxiliary winding needle 121 is arc-shaped. The auxiliary winding needle 121 can fit an outer surface of the winding needle 120, so as to facilitate clamping of the starting end of the electrode plate 130 and the separator 140. After the winding device 100 winds the electrode plate 130 and the separator 140 to a preset thickness, the auxiliary winding needle 121 can be withdrawn.

In the embodiments of this application, the auxiliary winding needle 121 is disposed on one side of the winding needle 120, and the auxiliary winding needle 121 and the winding needle 120 clamp the starting end of the electrode plate 130 and the separator 140, which facilitates winding of the electrode plate 130 and the separator 140 by the winding device 100 and improves winding efficiency of the winding device 100 for the electrode assembly 150.

According to some embodiments, the winding device 100 further includes an auxiliary mechanism 170, the auxiliary mechanism 170 is disposed on one side of the winding needle 120, the auxiliary mechanism 170 abuts against an outer circumference of the electrode assembly 150, and a rotation direction of the auxiliary mechanism 170 is opposite to a winding direction of the winding needle 120, so as to adjust the tension of the electrode plate 130 and the separator 140.

In the embodiments of this application, a cross section of the auxiliary mechanism 170 may be circular, and an axial length of the auxiliary mechanism 170 may be greater than or equal to an axial length of the winding needle 120. The axial length of the auxiliary mechanism 170 is set to achieve complete pressing of the electrode assembly 150, thereby improving uniformity of tension relief of the electrode plate 130 and the separator 140 at various positions of the electrode assembly 150. An outer diameter of the auxiliary mechanism 170 may be selected according to a diameter of the electrode assembly 150 after winding is completed. For example, the outer diameter of the auxiliary mechanism 170 may be less than or equal to the diameter of the electrode assembly 150 after winding is completed, so as to adjust impact of the tension of the electrode plate 130 and the separator 140 on the electrode assembly 150 and the winding needle 120, improve a yield rate of the electrode assembly 150, and prolong the service life of the winding needle 120.

In the embodiments of this application, an outer circumferential surface of the auxiliary mechanism 170 may be made of a flexible material, and the flexible material may be rubber, carbon fiber, or the like, which has good wear resistance and surface smoothness, and can have certain elasticity and flexibility. The auxiliary mechanism 170 made of the flexible material can reduce surface roughness and hardness, improve smoothness, avoid scratching or bruising the surface of the electrode assembly 150 or wrinkling the electrode plate 130 and the separator 140, and improve protection of the electrode assembly 150, so as to improve the yield rate of the electrode assembly 150. The outer circumferential surface of the auxiliary mechanism 170 may be of an integrally formed structure with an internal structure of the auxiliary mechanism 170, for example, the auxiliary mechanism 170 is a rubber wheel, or only an outer circumferential side of the auxiliary mechanism 170 is wrapped with a rubber layer, which is not limited herein.

In the embodiments of this application, the auxiliary mechanism 170 can abut against the outer circumference of the electrode assembly 150 and rotate relative to the electrode plate 130. By setting the rotation direction and abutting pressure of the auxiliary mechanism 170, in an initial stage of winding, rotation in a direction opposite to a winding direction can block the tension of the electrode plate 130 and the separator 140, reducing pulling and pressing of the tension on the electrode plate 130 and the separator 140, thereby increasing an interlayer gap in an inner circle; and in a later stage of winding, by pressing the electrode assembly 150, an electrode plate 130 or separator 140 in an outer circle is compacted, thereby reducing a winding gap in the outer circle, improving difference in interlayer gap between the inner circle and the outer circle, thereby alleviating the problem of collapse of a center hole of the electrode assembly 150 and the problem of lithium precipitation in the outer circle, and improving the use performance of the electrode assembly 150.

In the embodiments of this application, the auxiliary mechanism 170 abuts against the outer circumference of the electrode assembly 150, and the rotation direction of the auxiliary mechanism 170 is opposite to the winding direction of the winding needle 120, which can adjust impact of the tension of the electrode plate 130 and the separator 140 on the electrode assembly 150 and the winding needle 120, thereby improving a yield rate of the electrode assembly 150 and prolonging the service life of the winding needle 120.

According to some embodiments, the auxiliary mechanism 170 is disposed corresponding to a position at which the electrode plate 130 and the separator 140 are wound onto the winding needle 120.

In the embodiments of this application, at the position where the electrode plate 130 and the separator 140 are about to be wound onto the winding needle 120, the electrode plate 130 and the separator 140 at this position have greater freedom than the electrode plate 130 and the separator 140 at other positions of the electrode assembly 150. In order to improve a tension adjustment effect of the auxiliary mechanism 170, the auxiliary mechanism 170 is disposed at this position, and through friction with the electrode plate 130 and the separator 140 at this position, the tension of the electrode plate 130 and the separator 140 at this position can be reduced, making an improvement effect more obvious.

In the embodiments of this application, disposing the auxiliary mechanism 170 at the position at which the electrode plate 130 and the separator 140 are wound onto the winding needle 120 can improve efficiency and probability of tension adjustment of the electrode plate 130 and the separator 140.

According to some embodiments, the winding device 100 further includes a cutter 180 configured to cut the electrode plate 130 and the separator 140, and the cutter 180 is disposed on a side of the feeding mechanism 110 away from the winding needle 120.

In the embodiments of this application, the cutter 180 is disposed on the side of the feeding mechanism 110 away from the winding needle 120. After a length of the electrode plate 130 or the separator 140 reaches a preset length, the cutter 180 cuts the electrode plate 130 or the separator 140. After the cutter 180 cuts the electrode plate 130 and the separator 140, the feeding mechanism 110 can still convey the electrode plate 130 and the separator 140, and the electrode plate 130 and the separator 140 are conveyed to the winding needle 120 for winding.

In the embodiments of this application, disposing the cutter 180 on the side of the feeding mechanism 110 away from the winding needle 120 can improve reliability of the winding device 100 and help improve a yield rate of the electrode assembly 150 formed by winding.

FIG. 7 is a flowchart of a winding method according to some embodiments of this application. As shown in FIG. 7, the winding method includes the following steps.

Step S710: Convey an electrode plate and a separator to a winding needle.

Step S720: The winding needle winds the electrode plate 130 and the separator in a preset direction to form an electrode assembly, where a relationship between a diameter r of the winding needle winding the electrode assembly and a diameter R of the electrode assembly after winding is completed satisfies: $\frac{R}{r} > 10$.

In the embodiments of this application, the electrode plate may include a positive electrode plate and a negative electrode plate, and the separator may include a first separator and a second separator. The first separator is located between the positive electrode plate and the negative electrode plate and is configured to isolate the positive electrode plate from the negative electrode plate. The first separator and the second separator are respectively located on two sides of the negative electrode plate.

In the related art, the diameter R of the electrode assembly after winding is completed is less than or equal to 10 times the diameter r of the winding needle, while in the embodiments of this application, the relationship between the diameter r of the winding needle and the diameter R of the electrode assembly after winding is completed satisfies: $\frac{R}{r} > 10$, that is, the diameter R of the electrode assembly after winding is completed is at least more than 10 times the diameter r of the winding needle. Relatively, in this application, the diameter of the winding needle is smaller, the radius of an internal center hole of the electrode assembly after winding is completed is smaller, and a smaller radius of the internal center hole of the electrode assembly indicates a greater support strength of the internal center hole. During subsequent cyclic swelling of the electrode assembly, the probability of collapse of the internal center hole of the electrode assembly caused by subsequent cyclic swelling can be reduced.

In the embodiments of this application, the winding needle winds the conveyed electrode plate and separator to form the electrode assembly, and the relationship between the diameter r of the winding needle and the diameter R of the electrode assembly after winding is completed satisfies: $\frac{R}{r} > 10$. The diameter r of the winding needle is much smaller than the diameter R of the electrode assembly after winding is completed, which can reduce the probability of collapse of a center hole of the electrode assembly after winding is completed, thereby improving the reliability of the electrode assembly.

According to some embodiments of this application, the relationship between the diameter r of the winding needle and the diameter R of the electrode assembly after winding is completed satisfies: $\frac{R}{r} \leq 15$.

In the embodiments of this application, if the diameter r of the winding needle is too small relative to the diameter R of the electrode assembly after winding is completed, since the diameter r of the winding needle is too small, the winding needle is more prone to deformation during winding, which leads to a reduction in the service life of the winding needle. In order to reduce the probability of collapse of a center hole of the electrode assembly while reducing the probability of deformation of the winding needle to prolong the service life of the winding needle, the diameter r of the winding needle should not be too small relative to the diameter R of the electrode assembly after winding is completed, and the diameter R of the electrode assembly may be less than or equal to 15 times the diameter r of the winding needle.

In the embodiments of this application, the relationship between the diameter r of the winding needle and the diameter R of the electrode assembly after winding is completed satisfies: $\frac{R}{r} \leq 15$, which can further reduce the probability of collapse of the center hole of the electrode assembly after winding is completed, thereby further improving the reliability of the electrode assembly.

According to some embodiments of this application, the winding method may further include: in a winding acceleration stage of winding the electrode plate and the separator, controlling a moving speed of the electrode plate and the separator to be greater than or equal to a winding speed of the winding needle winding the electrode plate and the separator, so as to adjust tension of the electrode plate and the separator.

In a process in which the winding needle winds the electrode plate and the separator to form the electrode assembly, a preparation stage (including preparation work such as station change and needle threading), a pre-winding and feeding stage (winding starts, and a rotational speed of the winding needle is relatively slow at that time), a winding acceleration stage (the rotational speed of the winding needle increases rapidly), a constant-speed winding stage (the rotational speed of the winding needle is relatively fast and remains unchanged), a deceleration winding stage (the rotational speed of the winding needle gradually decreases), and a finishing stage are usually undergone.

In the winding acceleration stage of winding the electrode plate and the separator, the rotational speed of the winding needle increases rapidly, that is, the winding speed of the winding needle winding the electrode plate and the separator also increases rapidly. If the moving speed of the electrode plate and the separator is less than the winding speed of the winding needle winding the electrode plate and the separator at that time, the tension of the electrode plate and the separator increases, causing deflection deformation of the winding needle, thereby affecting the service life of the winding needle. In the embodiments of this application, in the winding acceleration stage of winding the electrode plate and the separator, the moving speed of the electrode plate and the separator is controlled such that the moving speed of the electrode plate and the separator is greater than or equal to the winding speed of the winding needle winding the electrode plate and the separator, which can adjust the tension of the electrode plate and the separator, reducing the tension of the electrode plate and the separator.

In the embodiments of this application, in the winding acceleration stage of winding the electrode plate and the separator, the moving speed of the electrode plate and the separator is controlled such that the moving speed of the electrode plate and the separator is greater than or equal to the winding speed of the winding needle winding the electrode plate and the separator, which can reduce tension of the separator and tension of the electrode plate that the winding needle is subjected to during winding of the electrode assembly, which can reduce the probability of deformation of the winding needle, thereby prolonging the service life of the winding needle.

According to some embodiments of this application, the winding method may further include: controlling a rotation direction of an auxiliary mechanism to be opposite to the preset direction, so as to adjust the tension of the electrode plate and the separator.

In the embodiments of this application, the auxiliary mechanism can abut against an outer circumference of the electrode assembly and rotate relative to the electrode plate. By setting the rotation direction and abutting pressure of the auxiliary mechanism, in an initial stage of winding, rotation in a direction opposite to a winding direction can block the tension of the electrode plate and the separator, reducing pulling and pressing of the tension on the electrode plate and the separator, thereby increasing an interlayer gap in an inner circle; and in a later stage of winding, by pressing the electrode assembly, an electrode plate or separator in an outer circle is compacted, thereby reducing a winding gap in the outer circle, improving difference in interlayer gap between the inner circle and the outer circle, thereby alleviating the problem of collapse of a center hole of the electrode assembly and the problem of lithium precipitation in the outer circle, and improving performance of the electrode assembly.

In the embodiments of this application, making the rotation direction of the auxiliary mechanism opposite to the winding direction of the winding needle can adjust impact of the tension of the electrode plate and the separator on the electrode assembly and the winding needle, thereby improving a yield rate of the electrode assembly and prolonging the service life of the winding needle.

The embodiments of this application further provide a battery cell, the battery cell including an electrode assembly formed by winding using the winding device in the foregoing embodiments.

The battery cell in the embodiments of this application may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present disclosure. The battery cell may be cylindrical, flat, cuboid, or in other shapes, which is not limited in the embodiments of this application. Battery cells are generally classified into three types according to packaging manners: cylindrical battery cells, prismatic battery cells, and pouch battery cells, which is not limited in the embodiments of this application.

In the embodiments of this application, using the electrode assembly formed by winding using the winding device can reduce the probability of collapse of a center hole of the electrode assembly, thereby improving reliability of the battery cell.

The embodiments of this application further provide a battery, the battery including the battery cell in any of the foregoing embodiments.

In the embodiments of this application, the battery may be applied to, but is not limited to, a mobile phone, a tablet, a laptop computer, an electric toy, an electric tool, an electric bicycle, an electric vehicle, a ship, a spacecraft, or the like. The electric toy may include a stationary or mobile electric toy, for example, a game console, an electric car toy, an electric ship toy, or an electric airplane toy, and the spacecraft may include an airplane, a rocket, a space shuttle, a spaceship, or the like.

In the embodiments of this application, using the electrode assembly formed by winding using the winding device can reduce the probability of collapse of a center hole of the electrode assembly, improve reliability of the battery cell, thereby improving reliability of the battery.

The embodiments of this application further provide an electric apparatus, the electric apparatus including the battery in any of the foregoing embodiments, where the battery is configured to provide electrical energy.

In the embodiments of this application, the electric apparatus may be, but is not limited to, a mobile phone, a tablet, a laptop computer, an electric toy, an electric tool, an electric bicycle, an electric vehicle, a ship, a spacecraft, or the like. The electric toy may include a stationary or mobile electric toy, for example, a game console, an electric car toy, an electric ship toy, or an electric airplane toy, and the spacecraft may include an airplane, a rocket, a space shuttle, a spaceship, or the like.

In the embodiments of this application, using the battery in the embodiments of this application can reduce the probability of collapse of a center hole of an electrode assembly, thereby improving reliability of the electric apparatus.

A specific embodiment is used below to illustrate the technical solutions of this application. As shown in FIG. 1 to FIG. 6, a winding device 100 includes a feeding mechanism 110, a winding needle 120, an auxiliary mechanism 170, and a cutter 180. The winding needle 120 is of an integrally formed structure, an auxiliary winding needle 121 is disposed on one side of the winding needle 120, and the auxiliary winding needle 121 and the winding needle 120 clamp a starting end of an electrode plate 130 and a separator 140. The feeding mechanism 110 is configured to convey the electrode plate 130 and the separator 140; and the winding needle 120 is configured to wind the electrode plate 130 and the separator 140 conveyed by the feeding mechanism 110 to form an electrode assembly 150, where a relationship between a diameter r of the winding needle 120 and a diameter R of the electrode assembly 150 after winding is completed satisfies: $10 < \frac{R}{r} \leq 15$.

The feeding mechanism 110 includes an adjustment mechanism 160, the adjustment mechanism 160 includes a first roller 161 and a second roller 162 that are disposed opposite to each other, and the electrode plate 130 and the separator 140 pass between the first roller 161 and the second roller 162; and the first roller 161 and the second roller 162 are configured to clamp the electrode plate 130 and the separator 140 and drive the electrode plate 130 and the separator 140 to move, so as to adjust tension of the electrode plate 130 and the separator 140. In a winding acceleration stage of winding the electrode plate 130 and the separator 140, the adjustment mechanism 160 drives the electrode plate 130 and the separator 140 to move, such that a moving speed of the electrode plate 130 and the separator 140 is greater than or equal to a winding speed of the winding needle 120 winding the electrode plate 130 and the separator 140, so as to adjust the tension of the electrode plate 130 and the separator 140.

The auxiliary mechanism 170 is disposed corresponding to a position at which the electrode plate 130 and the separator 140 are wound onto the winding needle 120, the auxiliary mechanism 170 abuts against an outer circumference of the electrode assembly 150, and a rotation direction of the auxiliary mechanism 170 is opposite to a winding direction of the winding needle 120, so as to adjust the tension of the electrode plate 130 and the separator 140.

The cutter 180 is configured to cut the electrode plate 130 and the separator 140, and the cutter 180 is disposed on a side of the feeding mechanism 110 away from the winding needle 120.

Finally, it should be noted that the above embodiments are only used to illustrate the technical solutions of this application, but are not intended to limit the technical solutions. Although this application has been described in detail with reference to the foregoing embodiments, those of ordinary skill in the art should understand that modifications can still be made to the technical solutions recorded in the foregoing embodiments, or equivalent replacements can be made to some or all of the technical features thereof; and these modifications or replacements do not make the essence of the corresponding technical solutions depart from the scope of the technical solutions of the embodiments of this application, and should all be covered within the scope of the claims and specification of this application. In particular, as long as there is no structural conflict, the technical features mentioned in the embodiments can be combined in any manner. This application is not limited to the specific embodiments disclosed herein, but includes all technical solutions falling within the scope of the claims.

## Claims

1. A winding device, comprising:
a feeding mechanism configured to convey an electrode plate and a separator; and
a winding needle configured to wind the electrode plate and the separator conveyed by the feeding mechanism to form an electrode assembly, wherein a relationship between a diameter r of the winding needle and a diameter R of the electrode assembly after winding is completed satisfies: $\frac{R}{r} > 10$.

2. The winding device according to claim 1, wherein the relationship between the diameter r of the winding needle and the diameter R of the electrode assembly after winding is completed satisfies: $\frac{R}{r} \leq 15$.

3. The winding device according to claim 1 or 2, wherein the feeding mechanism comprises an adjustment mechanism, and the adjustment mechanism is configured to clamp the electrode plate and the separator and drive the electrode plate and the separator to move, so as to adjust tension of the electrode plate and the separator.

4. The winding device according to claim 3, wherein the adjustment mechanism comprises a first roller and a second roller that are disposed opposite to each other, and the electrode plate and the separator pass between the first roller and the second roller; and
the first roller and the second roller are configured to clamp the electrode plate and the separator and drive the electrode plate and the separator to move, so as to adjust the tension of the electrode plate and the separator.

5. The winding device according to claim 3 or 4, wherein in a winding acceleration stage of winding the electrode plate and the separator, the adjustment mechanism drives the electrode plate and the separator to move, such that a moving speed of the electrode plate and the separator is greater than or equal to a winding speed of the winding needle winding the electrode plate and the separator, so as to adjust the tension of the electrode plate and the separator.

6. The winding device according to any one of claims 1 to 5, wherein the winding needle is of an integrally formed structure.

7. The winding device according to any one of claims 1 to 6, wherein the winding device further comprises an auxiliary winding needle, the auxiliary winding needle is disposed on one side of the winding needle, and the auxiliary winding needle and the winding needle clamp a starting end of the electrode plate and the separator.

8. The winding device according to any one of claims 1 to 7, wherein the winding device further comprises an auxiliary mechanism, the auxiliary mechanism is disposed on one side of the winding needle, the auxiliary mechanism abuts against an outer circumference of the electrode assembly, and a rotation direction of the auxiliary mechanism is opposite to a winding direction of the winding needle, so as to adjust the tension of the electrode plate and the separator.

9. The winding device according to claim 8, wherein the auxiliary mechanism is disposed corresponding to a position at which the electrode plate and the separator are wound onto the winding needle.

10. The winding device according to any one of claims 1 to 9, further comprising a cutter configured to cut the electrode plate and the separator, wherein the cutter is disposed on a side of the feeding mechanism away from the winding needle.

11. A winding method, comprising:
conveying an electrode plate and a separator to a winding needle; and
winding, by the winding needle along a preset direction, the electrode plate and the separator to form an electrode assembly, wherein a relationship between a diameter r of the winding needle winding the electrode assembly and a diameter R of the electrode assembly after winding is completed satisfies: $\frac{R}{r} > 10$.

12. The method according to claim 11, wherein the relationship between the diameter r of the winding needle and the diameter R of the electrode assembly after winding is completed satisfies: $\frac{R}{r} \leq 15$.

13. The method according to claim 11 or 12, further comprising:
in a winding acceleration stage of winding the electrode plate and the separator, controlling a moving speed of the electrode plate and the separator to be greater than or equal to a winding speed of the winding needle winding the electrode plate and the separator, so as to adjust tension of the electrode plate and the separator.

14. The method according to any one of claims 11 to 13, further comprising:
controlling a rotation direction of an auxiliary mechanism to be opposite to the preset direction, so as to adjust the tension of the electrode plate and the separator.

15. A battery cell, comprising an electrode assembly formed by winding using the winding device according to any one of claims 1 to 10.

16. A battery, comprising the battery cell according to claim 15.

17. An electric apparatus, the electric apparatus comprising the battery according to claim 16, wherein the battery is configured to provide electrical energy.
